# EUROPEAN PATENT APPLICATION

(11) **EP 4 365 814 A1**
(43) Date of publication of application: **08.05.2024**
(21) Application number: 22832599.9
(22) Date of filing: 27.04.2022
(51) Int. Cl.: G06Q 50/06, H02J 3/00, H02J 13/00

(54) **INFORMATION PROCESSING DEVICE, AND PROGRAM**

(30) Priority: 28.06.2021 JP 2021106596
(71) Applicant: DAIKIN INDUSTRIES, LTD., Osaka-shi, Osaka 530-0001 (JP)
(72) Inventor: NAKAGAWA, Yoshihiro, Osaka-shi, Osaka 5300001 (JP)
(74) Representative: Hoffmann Eitle
(86) International application number: PCT/JP2022/019097
(87) International publication number: WO 2023/276439

(57) **Abstract**

[Object] To contribute to improvement in convenience regarding setting of a target value in demand control by providing in a graph indicating, for each time period, a power consumption record in the time period, information on the date and time of the time period.

[Solution] An information processing device includes a display unit, a display control unit configured to cause the display unit to display a screen, and a reception unit configured to receive a setting related to control on power consumption by a user. The display control unit causes the display unit to display power consumption records in predetermined respective time periods in a graph 411 of the time periods, and to display information on the date and time of the time periods in the graph 411.

## Description

### Technical Field

The present disclosure relates to an information processing device and a program.

### Background Art

PTL 1 discloses a demand control operation support method in which target power for each climate condition for each demand control target is set in advance, a seasonal forecast is acquired from a weather company through a network, target power for the corresponding climate condition for each demand control target is selected based on the acquired seasonal forecast, and the selected target power is supplied to the corresponding demand control target. It is also described in the document that demand values are sorted in descending order, and the smallest demand value the cumulative period to which from the largest value matches a set period is obtained as the target power.

### Citation List

### Patent Literature

PTL 1: Japanese Unexamined Patent Application Publication No. 2002-176728

### Summary of Invention

### Technical Problem

It is possible to make it easy to visually recognize the influence of the demand control by setting the target value of the power consumption using a graph indicating, for each predetermined time period (for example, 30 minutes), the power consumption record in the time period. Meanwhile, if the date and time of each demand can be identified in the graph used for setting the target value, it is expected that the user anticipates the influence of the demand control based on his or her memory of the corresponding date and time and sets the target value based on the anticipation.

An object of the present disclosure is to contribute to improvement in convenience regarding setting of a target value in demand control by providing in a graph indicating, for each time period, a power consumption record in the time period, information on the date and time of the time period.

### Solution to Problem

An information processing device according to the present disclosure includes: a display unit; a display control unit configured to cause the display unit to display a screen; and a reception unit configured to receive a setting related to control on power consumption by a user, wherein the display control unit causes the display unit to display power consumption records in predetermined respective time periods in a graph of the time periods, and to display information on date and time of the time periods in the graph.

This configuration can contribute to improvement in convenience regarding setting of a target value in demand control by providing in a graph indicating, for each time period, a power consumption record in the time period, information on the date and time of the time period.

The graph may be a graph in which power consumption records in a predetermined period are arranged in order of magnitude of the power consumption records in the respective time periods.

This configuration enables the graph to be referred to when setting the target value in the demand control, and can contribute to improvement in convenience regarding setting of the target value.

The reception unit may receive a selection of at least one of the power consumption records in the respective time periods in the graph displayed on the display unit, and the display control unit may display, on the display unit, a time-series graph in which power consumption records in the respective time periods in a predetermined period including the time period selected in the graph are arranged in time series.

With this configuration, it is possible to refer to more detailed information on the time period of interest of the user, including time periods before and after the time period of interest. Thus, the configuration can contribute to improvement in convenience regarding setting of the target value in the demand control.

The display control unit may display, in the time-series graph indicating the power consumption records in the respective time periods in the predetermined period, power consumption by each equipment appliance that consumes power in a distinguishable manner.

With this configuration, it is possible to refer to more detailed information on the power consumption record in the time period of interest of the user. Thus, the configuration can contribute to improvement in convenience regarding setting of the target value in the demand control.

The information processing device may further include a calculation unit configured to calculate, based on a difference between power consumption in a time period selected in the graph and power consumption in another time period, power reduction effect achieved when the setting is made with the power consumption in the selected time period being a target value.

With this configuration, the power reduction effect achieved with the target value to be set can be recognized. Thus, the power reduction effect can be referred to in the setting of the target value in the demand control.

The display control unit may display, on the display unit, information on the power reduction effect achieved when the power consumption in the time period selected in the graph is set as a target value.

With this configuration, the power reduction effect achieved with the target value to be set can be visually recognized. Thus, the power reduction effect can be referred to in the setting of the target value in the demand control.

The display control unit may display, on the display unit, number of time periods in which power consumption exceeds power consumption in a time period selected in the graph.

With this configuration, the relationship between the target value to be set and the power consumption in another time period can be visually recognized.

The reception unit may receive an operation of switching a display on a screen displayed on the display unit, and the display control unit may switch between an operation screen for receiving the setting related to control on the power consumption by the user and the display of the power consumption records, and display the operation screen or the power consumption record on the display unit, based on the operation received by the reception unit.

With this configuration, the user can refer to the graph indicating, for each time period, the power consumption record in the time period, separately from the operation for receiving the setting related to control on the power consumption.

The reception unit may receive an operation for displaying the power consumption records, and the display control unit may display the graph on the display unit together with an operation screen for receiving the setting related to control on the power consumption by the user, based on the operation received by the reception unit.

With this configuration, the user can immediately perform the operation for receiving the setting related to control on the power consumption on the screen with reference to the graph indicating, for each time period, the power consumption record in the time period.

The reception unit may receive an operation for displaying the power consumption records, and the display control unit may display the graph on the display unit before receiving the setting related to control on the power consumption by the user, based on the operation received by the reception unit.

With this configuration, the user can refer to the graph indicating, for each time period, the power consumption record in the time period in advance, separately from the operation for receiving the setting related to control on the power consumption.

The reception unit may receive an operation for displaying the power consumption records, and the display control unit may display the graph on the display unit when receiving the setting related to control on the power consumption by the user, based on the operation received by the reception unit.

With this configuration, the user can perform the operation for receiving the setting related to control on the power consumption by referring to the screen with the graph indicating, for each time period, the power consumption record in the time period.

The reception unit may include an operation unit configured to receive the setting related to control on the power consumption, through a touch operation on the display unit by the user.

With this configuration, the setting can be made by a touch operation, which is an intuitive operation, on the graph displayed on the screen. Thus, the configuration can contribute to the improvement in convenience regarding setting of the target value in the demand control.

A program of the present disclosure is a program for causing a computer to function as a display control unit configured to cause a display device to display a screen, and a reception unit configured to receive a setting related to control on power consumption by a user. The computer functioning as the display control unit causes the display device to display power consumption records in predetermined respective time periods in a graph of the time periods, and information on date and time of the time periods in the graph.

The computer in which the program is installed can contribute to improvement in convenience regarding setting of a target value in demand control by providing in the graph indicating, for each time period, the power consumption record in the time period, information on the date and time of the time period.

### Brief Description of Drawings

[Fig. 1] Fig. 1 is a diagram illustrating an overall configuration of a control system for an equipment appliance, for which an information processing device according to the present embodiment is used.
[Fig. 2] Fig. 2 is a diagram illustrating a configuration of a server.
[Fig. 3] Fig. 3 is a diagram illustrating a configuration of a control device.
[Fig. 4] Fig. 4 is a diagram illustrating an example of a hardware configuration of the control device and the server.
[Fig. 5] Fig. 5 is a diagram illustrating a configuration of the equipment appliance.
[Fig. 6] Fig. 6 is a diagram illustrating a configuration of a terminal device.
[Fig. 7] Fig. 7 is a diagram illustrating an example of a hardware configuration of the terminal device.
[Fig. 8] Fig. 8 is a diagram illustrating an example of a first screen for displaying a power consumption record based on the magnitude of average power consumption.
[Fig. 9] Fig. 9 is a diagram illustrating an example of a second screen for displaying the power consumption records in a predetermined period in time series. Description of Embodiments

An embodiment will be described below in detail with reference to the accompanying drawings.

### <System configuration>

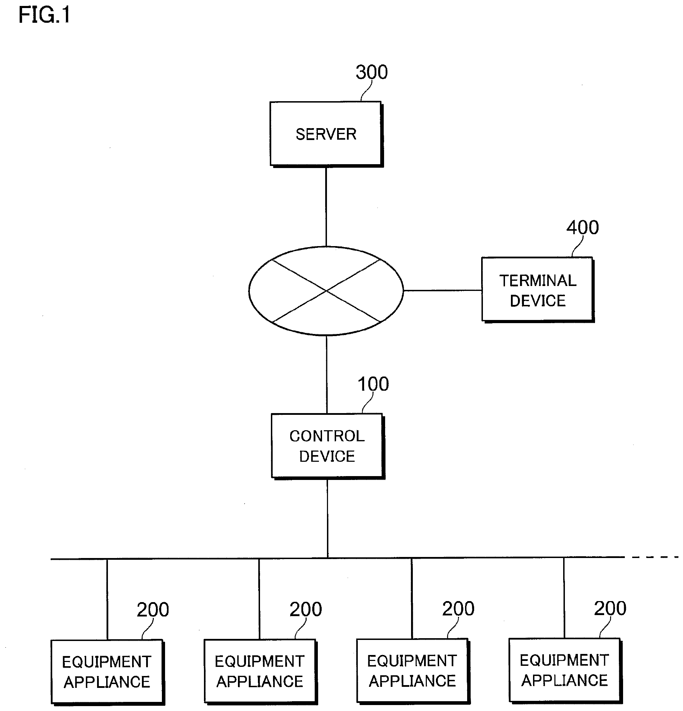

Fig. 1 is a diagram illustrating an overall configuration of a control system for an equipment appliance, for which an information processing device according to the present embodiment is used. This control system includes a control device 100, equipment appliances 200 that are controlled apparatuses, a server 300, and a terminal device 400. The control device 100 and the equipment appliances 200 are connected through a network. The network may be a local area network (LAN) based on a dedicated line, a wide area network (WAN), a virtual private network (VPN) set on the Internet, or the like.

The equipment appliance 200 is equipment/appliance that operates using power. The control device 100 controls the operation of one or a plurality of equipment appliances 200. Fig. 1 illustrates a configuration example in which the control device 100 controls a plurality of equipment appliances 200. The equipment appliance 200 may be any type of equipment/appliance as long as the equipment/appliance operates using power and the operation is controlled by the control device 100. In the following description, an example in which the control system of the present embodiment is applied to control on an air conditioner as a specific example of the equipment appliance 200 may be described.

Further, the equipment appliance 200 is provided with a control unit that controls the equipment appliance 200 in accordance with an instruction from the control device 100. The control device 100 generates an instruction (hereafter, referred to as a "control instruction") for controlling the equipment appliance 200 which is a control target, and transmits the generated control instruction to each equipment appliance 200. Each of the equipment appliances 200 acquires the control instruction from the control device 100, and then the control unit of the equipment appliance 200 performs the setting of the equipment appliance 200 and controls the operation in accordance with the acquired control instruction.

The control device 100, the server 300, and the terminal device 400 are connected through a network. In the configuration example illustrated in Fig. 1, one control device 100 connected to the server 300 is illustrated, but a plurality of the control devices 100 are actually connected to the server 300. One or a plurality of equipment appliances 200 are connected to each control device 100. As the network connecting the control device 100 and the server 300, for example, the Internet is used. Alternatively, a LAN or a WAN may be used.

The terminal device 400 is a device that is connected to the server 300, transmits and receives information to and from the server 300, and performs the setting of the control system. As will be described in detail below, the terminal device 400 acquires information on power demand managed by the server 300 and presents the information to the user. In addition, the terminal device 400 transmits target power setting information based on the contract power, to the server 300 in response to the input from the user.

### <Relationship between electricity charge and control on equipment appliance 200>

Here, the electricity charge will be described. The electricity charge is determined for each month mainly by a basic rate and a power rate. The basic rate is calculated based on a basic rate unit price and contract power. The contract power is the maximum value of the maximum demand power within one year from the current month. The maximum demand power is the maximum value of the average power consumption in each time period (demand time period: 30 minutes) in a month. The average power consumption is an average value of the demanded power (power consumption) in each time period. The power rate is calculated based on the power rate unit price and the monthly power consumption amount.

As described above, the contract power is the maximum value of the maximum demand power within a past year. Therefore, when the maximum demand power in a certain month (in other words, the average power consumption in a certain time period in the month) reaches the contract power, even if the maximum demand power lower than the contract power is continuously maintained after the month, the basic rate based on the contract power is charged for a year. When the average power consumption in a certain time period exceeds the value of the contract power at that point and reaches the maximum demand power of the month including the time period, the average power consumption (maximum demand power) in this time period is used as the new contract power for the calculation of the basic rate thereafter.

The power rate unit price is set in various ways. The power rate unit price may be set to vary based on a predetermined condition. For example, the power rate unit price may be set to vary depending on the time zone of a day, whether the day is a weekday or a holiday, the season, or the like. In addition, there is a case where power is traded in a market, and the power rate unit price may be set to vary to reflect a trade price of the power in the market.

The equipment appliance 200 may be controlled in such a manner to reduce the electricity charge required for the operation of the equipment appliance 200. In this case, the equipment appliance 200 is required to be controlled such that the average power consumption does not exceed the current contract power. When the power rate unit price varies, higher efficiency in terms of reduction of the electricity charge can be achieved in a case where the power consumption is reduced in a time zone in which the unit price is high, compared with a case where the power consumption is reduced in a time zone in which the unit price is low. Still, while the power rate unit price affects only the power rate for each time period, the contract power affects the electricity charge over a year from the current month. Therefore, priority is given to the control in consideration of the average power consumption over the control in consideration of the variation in the power rate unit price. The control performed to prevent the average power consumption from exceeding the current contract power is referred to as demand control.

The electricity charge is charged to a consumer who is a contractor of power supply. The consumer has one or a plurality of equipment appliances 200. The control device 100 controls the equipment appliance 200 of one or a plurality of consumers. The control device 100 performs control on the equipment appliance 200 of each consumer in consideration of the average power consumption in each time period and the power rate unit price according to the electricity charge (basic rate and power rate) set for each consumer. The specific content of the control on the equipment appliance 200 by the control device 100 will be described below.

### <Configuration of server 300>

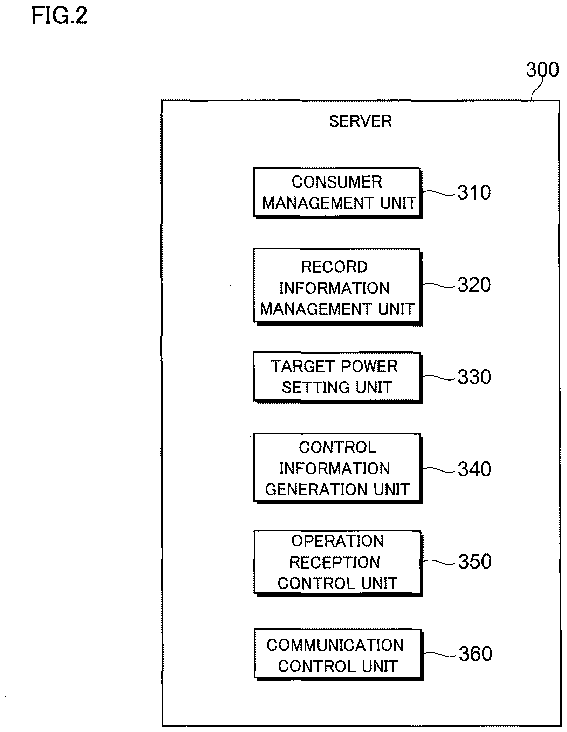

Fig. 2 is a diagram illustrating a configuration of the server 300. The server 300 is implemented as, for example, a server (what is known as a cloud server) or the like established on a network cloud environment. The server 300 includes a consumer management unit 310, a record information management unit 320, a target power setting unit 330, a control information generation unit 340, an operation reception control unit 350, and a communication control unit 360.

The consumer management unit 310 manages consumer information. The consumer information includes, for example, contract power of each consumer, information on the equipment appliance 200 of each consumer, and the like, in addition to information for identifying the consumer him or herself.

The record information management unit 320 acquires and manages record information on the equipment appliance 200 of each consumer. The record information includes information related to the operation status of the equipment appliance 200 (hereafter referred to as "operation information"), information on average power consumption in each time period based on the actual operation, and the like. The information on the average power consumption in each time period includes the date and time for identifying each time period. The record information management unit 320 for example, acquires record information from the control device 100 that controls the equipment appliance 200 of each consumer. After the end of each time period, the record information management unit 320 acquires record information in the ended time period and stores the record information in a storage device (not illustrated). As a method of acquiring the record information, the record information may be acquired at any time when the record information is acquirable after the end of each time period, and the record information in a plurality of time periods may be acquired periodically (once a day for example) and collectively.

The target power setting unit 330 sets a target value (hereafter, referred to as "target power") of average power consumption by the equipment appliance 200 of each consumer in each time period. When the average power consumption by the consumer consuming power exceeds the contract power, this average power consumption is set as the new contract power, and the basic rate in the electricity charge increases. Thus, the demand control is managed in such a manner that the target power based on the contract power is set, and the average power consumption in each time period is controlled so as not to exceed the target power. The target power is set to a value equal to or less than the contract power, for example, a value lower than the contract power by a certain value.

The target power setting unit 330 may predict the average power consumption by the equipment appliance 200 of each consumer in each time period, and set the target power for the average power consumption by each consumer in each time period based on the prediction result. The average power consumption can be predicted by various existing prediction methods. For example, the environmental information and the operation information on the equipment appliance 200 and the power consumption record may be accumulated, and the average power consumption may be predicted from the anticipated environment and operation state of the equipment appliance 200 in a future time period. Information such as the environmental information, the operation information, and the power consumption record of the equipment appliance 200 may be collected in each equipment appliance 200 and acquired via the control device 100, for example. For example, record information acquired from the control device 100 by the record information management unit 320 may be used as the operation information and the power consumption record information.

The target power setting unit 330 may refer to information on the target power sent from the terminal device 400, for setting the target power. As will be described in detail below, in the present embodiment, the terminal device 400 receives an input of an anticipated value of the target power from the user. Based on the anticipated value of the target power, the target power setting unit 330 may set the target value, for example, to be equal to or smaller than the anticipated value or to be equal to or larger than the anticipated value. When the target power setting unit 330 acquires the anticipated value of the target power together with the setting instruction from the terminal device 400, the target power setting unit 330 may directly set the acquired anticipated value as the target power.

The control information generation unit 340 generates control information for controlling the equipment appliance 200 of each consumer. The control information is information for causing the control device 100 to control the equipment appliance 200 such that the average power consumption by the equipment appliance 200 of the consumer in each time period does not exceed the target power of the consumer set by the target power setting unit 330 for the time period. Before a time period in which the control based on each control information starts, the control information generation unit 340 generates the control information for the time period.

The operation reception control unit 350 receives an operation performed by the user on the terminal device 400. Specifically, for example, an operation screen is provided and displayed on the terminal device 400, and an operation on the displayed operation screen is received. As will be described in detail below, in the present embodiment, the record information on the average power consumption in each time period as a result of the operation of the equipment appliance 200 of the consumer is presented on the operation screen. Specifically, the operation screen is generated as a graph of the record information in the corresponding time period acquired from the record information management unit 320. The graph of the record information includes a graph in which the average power consumptions (power consumption records) in respective time period are arranged in descending order, and a graph in which the average power consumptions are arranged in time series. Details of these graphs will be described below. When an anticipated value (described below) of the target power is input on the terminal device 400 and an operation of transmitting the anticipated value to the server 300 is performed, the operation reception control unit 350 receives the anticipated value of the target power and transmits the anticipated value to the target power setting unit 330.

The communication control unit 360 transmits the control information generated by the control information generation unit 340 to the control device 100 that controls the equipment appliance 200 of the consumer corresponding to each control information. Before a time period in which the control based on each control information starts, the communication control unit 360 transmits the control information for the time period to the control device 100. When transmitting the control information for each time period to the control device 100, the communication control unit 360 may transmit the control information for reducing the average power consumption from that in the time period immediately before the time period that is the target of the transmission, before transmitting the control information for increasing the average power consumption from that in the time period immediately before the time period that is the target of the transmission.

The communication control unit 360 transmits and receives information in response to an access request from the terminal device 400. Specifically, the communication control unit 360 transmits an operation screen for performing an operation on the terminal device 400. The communication control unit 360 receives information or a command based on the operation performed on the terminal device 400.

### <Configuration of control device 100>

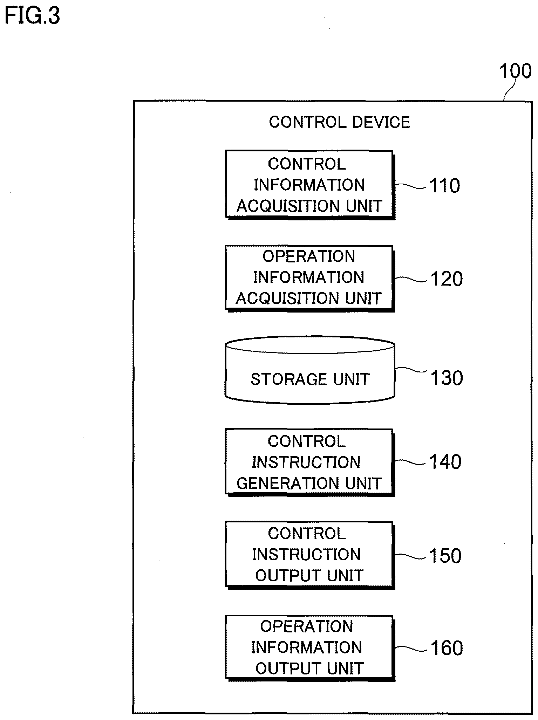

Fig. 3 is a diagram illustrating a configuration of the control device 100. The control device 100 is implemented as an information processing device connected to the server 300 and the equipment appliances 200 through a network. The control device 100 may be a device (for example, an edge server) provided in the vicinity of the equipment appliance 200 that is the control target, or may be a server (cloud server) established on a cloud environment. The control device 100 includes a control information acquisition unit 110, an operation information acquisition unit 120, a storage unit 130, a control instruction generation unit 140, a control instruction output unit 150, and an operation information output unit 160.

The control information acquisition unit 110 acquires control information on the equipment appliance 200 from the server 300. The control information includes information on the target power of the average power consumption set for each consumer. Before the control based on the control information for each time period is performed on the equipment appliance 200, the control information acquisition unit 110 acquires the control information for the corresponding time period.

The operation information acquisition unit 120 acquires operation information on the equipment appliance 200 which is the control target of the control device 100. The operation information acquired by the operation information acquisition unit 120 includes various types of information related to the operation of the equipment appliance 200. For example, information indicating an operation state such as an operation rate or a continuous operation time of the equipment appliance 200 is included. In addition, various types of information expected to have an influence on the operation of the equipment appliance 200, such as a time zone in which the equipment appliance 200 is operated and whether the equipment appliance 200 is operated on weekdays or on holidays, may be included. Further, the operation information acquisition unit 120 may acquire information (environmental information) on an environment in which the equipment appliance 200 is installed, such as a temperature and humidity. These pieces of information can be acquired by various existing methods depending on the type of information. For example, the information may be directly acquired from the equipment appliance 200, or may be acquired from various sensor devices or the like. The date and time information is obtained by, for example, a clock function or a calendar function of the control device 100.

The storage unit 130 stores various types of information acquired by the control information acquisition unit 110 and the operation information acquisition unit 120. The control information acquired by the control information acquisition unit 110 is used to control the equipment appliance 200. The control information is stored in the storage unit 130 before the time period for which the control based on the control information is performed starts. The operation information on the equipment appliance 200 acquired by the operation information acquisition unit 120 is transmitted to the server 300 at a predetermined timing, and is managed by the record information management unit 320 of the server 300.

The control instruction generation unit 140 generates a control instruction for controlling the equipment appliance 200 based on the control information acquired by the control information acquisition unit 110. The control instruction generation unit 140 generates a control instruction for operating the equipment appliance 200 while preventing the average power consumption by the equipment appliance 200 of each consumer in each time period from exceeding the target power set for the consumer for each time period. When one consumer has a plurality of equipment appliances 200, the control instruction is generated for each time period to prevent the integrated value of the average power consumptions by all the equipment appliances 200 of the one consumer from exceeding the target power of the corresponding time period. In this case, how the consumer allocates the power to the plurality of his or her equipment appliances 200 to prevent the target power from being exceeded is not particularly limited. For example, the power may be equally allocated according to the type of the equipment appliance 200, the scale of the apparatus, or the like. In addition, sufficient power may be allocated to a specific equipment appliance 200, and the remaining power may be allocated to other equipment appliances 200. Alternatively, in a certain time period, some of the equipment appliances 200 may not be operated, and the power may be consumed only by the rest of the equipment appliances 200. The control instruction generation unit 140 may generate a control instruction with reference to the operation information on the equipment appliance 200 acquired by the operation information acquisition unit 120.

The control instruction output unit 150 reads the control instruction generated by the control instruction generation unit 140 based on the control information acquired by the control information acquisition unit 110, from the storage unit 130, and transmits the control instruction to the equipment appliance 200 that is the control target of each control instruction, when the time period for which the control based on the control information is performed starts.

The operation information output unit 160 reads the operation information on the equipment appliance 200 acquired by the operation information acquisition unit 120 and held in the storage unit 130, from the storage unit 130, and transmits the operation information to the server 300, in accordance with a predetermined condition. The operation information may be read and transmitted in response to a request from the server 300, or may be periodically read and transmitted at a predetermined time of a day or the like.

### <Hardware configuration of control device 100 and server 300>

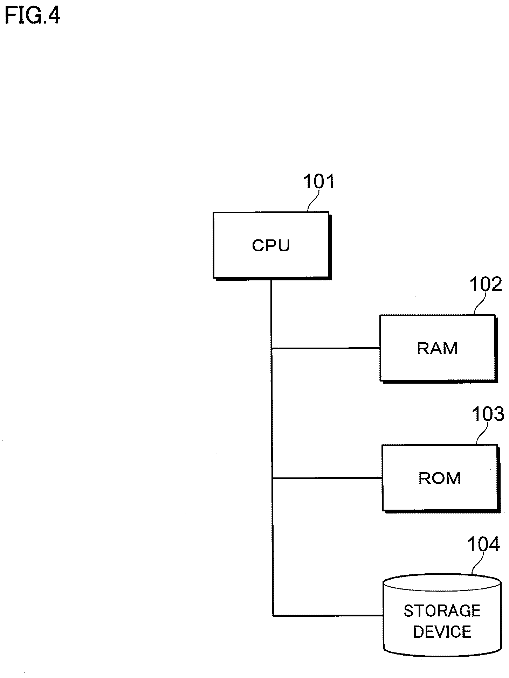

Fig. 4 is a diagram illustrating a hardware configuration example of the control device 100 and the server 300. The control device 100 and the server 300 are implemented by, for example, a computer. Even when the control device 100 and the server 300 are implemented as servers established in a cloud environment, system resources of a physical computer on a network as illustrated in Fig. 4 are used for configuring the control device 100 and the server 300 as a virtual system.

A computer that implements the control device 100 and the server 300 includes a central processing unit (CPU) 101 that is an arithmetic unit, as well as a random access memory (RAM) 102, a read only memory (ROM) 103, and a storage device 104 that are storage units. The RAM 102 is a main storage device (main memory) and is used as a working memory when the CPU 101 executes calculation processing. The ROM 103 stores programs and data such as a set value prepared in advance, and the CPU 101 can execute processing by directly reading the program and the data from the ROM 103. The storage device 104 is a unit for storing programs and data. The storage device 104 stores a program, and the CPU 101 loads the program stored in the storage device 104 onto the main storage device and executes the program. In addition, a result of processing by the CPU 101 is stored and held in the storage device 104. For example, a magnetic disk device, a solid state drive (SSD), or the like is used as the storage device 104.

When the control device 100 is implemented by the computer illustrated in Fig. 4, the functions of the control information acquisition unit 110, the operation information acquisition unit 120, the control instruction generation unit 140, the control instruction output unit 150, and the operation information output unit 160 described with reference to Fig. 3 are implemented by, for example, the CPU 101 executing a program. The storage unit 130 is implemented by, for example, the RAM 102 or the storage device 104. When the server 300 is implemented by the computer illustrated in Fig. 4, the functions of the consumer management unit 310, the record information management unit 320, the target power setting unit 330, the control information generation unit 340, the operation reception control unit 350, and the communication control unit 360 described with reference to Fig. 2 are implemented by, for example, the CPU 101 executing a program. The hardware configuration illustrated in Fig. 4 is merely an example of a case where the control device 100 is implemented by a computer.

### <Configuration of equipment appliance 200>

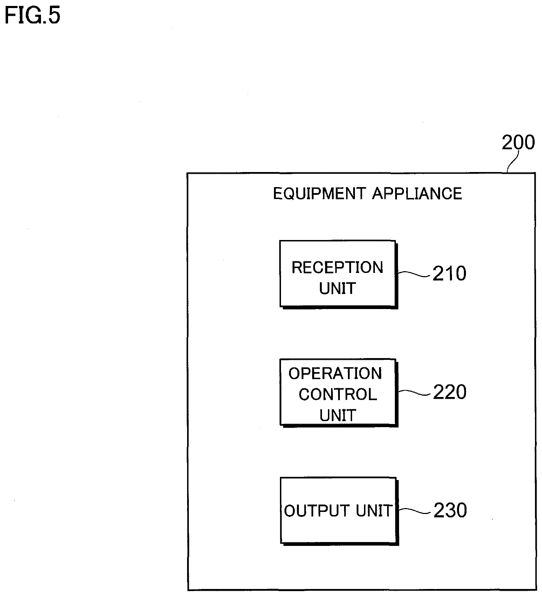

Fig. 5 is a diagram illustrating a configuration of the equipment appliance 200. The equipment appliance 200 includes a reception unit 210, an operation control unit 220, and an output unit 230. The equipment appliance 200 includes mechanisms and devices that operate to implement the functions of the equipment appliance 200 in accordance with the type of the equipment appliance 200. For example, when the equipment appliance 200 is an air conditioner, the equipment appliance 200 includes an indoor unit, an outdoor unit, and the like. When the equipment appliance 200 is lighting equipment, the equipment appliance 200 includes a lighting fixture, a control switch, and the like. The types and modes of such mechanisms and the like vary depending on the type of the equipment appliance 200, and therefore are not illustrated.

The reception unit 210 receives the control instruction output from the control device 100 through a network using a network interface (not illustrated).

The operation control unit 220 controls an operation of a mechanism or a device provided in the equipment appliance 200 based on the control instruction received by the reception unit 210. Specifically, for example, when the equipment appliance 200 is an air conditioner, the reception unit 210 receives information designating a set temperature as the control instruction, and the operation control unit 220 controls the operation of the indoor unit and the outdoor unit so that the received set temperature is achieved. While the example of the control related to the temperature setting is described herein, the control by the operation control unit 220 based on the control instruction can be applied to various types of control (such as, for example, control of humidity or a gas component) related to gas that can be controlled by the air conditioner. Further, also for various equipment appliances 200 other than the air conditioner, the operation control unit 220 executes control corresponding to the type of the equipment appliance 200 according to the control instruction received from the control device 100.

The output unit 230 outputs information on the operation state of the equipment appliance 200 to the control device 100 through a network by using a network interface (not illustrated).

The reception unit 210, the operation control unit 220, and the output unit 230 are implemented by, for example, a computer. The computer implementing the operation control unit 220 may have the configuration described with reference to Fig. 4. In this case, the functions of the reception unit 210, the operation control unit 220, and the output unit 230 are implemented by, for example, the CPU 101 illustrated in Fig. 4 executing a program. Alternatively, the functions of the reception unit 210, the operation control unit 220, and the output unit 230 may be implemented by dedicated hardware. For example, the functions may be implemented by an application specific integrated circuit (ASIC), a field-programmable gate array (FPGA), or other circuits. Furthermore, the reception unit 210, the operation control unit 220, and the output unit 230 may be implemented as a combination of a function implemented by the CPU 101 executing a program (software) and a function implemented by dedicated hardware.

### <Configuration of terminal device 400>

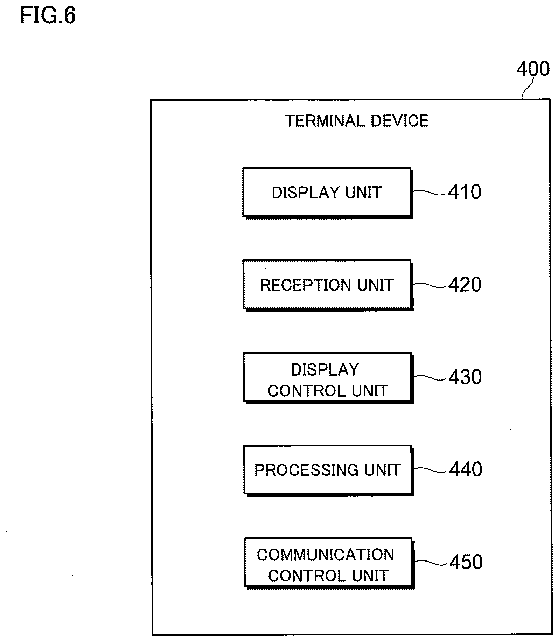

Fig. 6 is a diagram illustrating a configuration of the terminal device 400. The terminal device 400 is implemented as an information processing device that can be connected to the server 300 through a network. Specifically, for example, an information device such as a personal computer, a tablet information terminal, or a smartphone may be used as the terminal device 400. The terminal device 400 includes a display unit 410, a reception unit 420, a display control unit 430, a processing unit 440, and a communication control unit 450.

The display unit 410 displays various screens. The screen displayed on the display unit 410 includes an operation screen for receiving a user operation, an information presentation screen for presenting various types of information to the user, and the like. These screens include a screen received from the server 300 by the communication control unit 450. Details of the screen acquired from the server 300 and displayed on the display unit 410 in the present embodiment will be described below.

The reception unit 420 receives an input operation by a user. As will be described below, a touch panel that is a combination of a touch sensor and a display area of the display unit 410 may be provided as the reception unit 420, and an operation performed by touching an operation screen displayed on the display unit 410 may be received. When the reception unit 420 has such a configuration, it is possible to perform an input operation, an operation for displaying certain information, an operation for switching a screen, and the like through a touch operation, which is an intuitive operation, on the screen.

The display control unit 430 controls display of a screen on the display unit 410. Specifically, for example, a screen is configured based on the information acquired from the server 300 and displayed on the display unit 410, or control is performed to switch the display on the display unit 410.

The processing unit 440 executes various types of calculation processing. In the present embodiment, the processing unit 440 performs calculation related to the power and the electricity charge based on the record information on the average power consumption in response to the operation performed on the operation screen displayed on the display unit 410.

The communication control unit 450 is connected to the server 300 and transmits and receives information to and from the server 300. Specifically, the communication control unit 450 receives information on a screen to be displayed on the display unit 410 from the server 300. The communication control unit 450 transmits information indicating the content of the user operation received by the reception unit 420, a result of processing by the processing unit 440, and the like to the server 300.

### <Hardware configuration of terminal device 400>

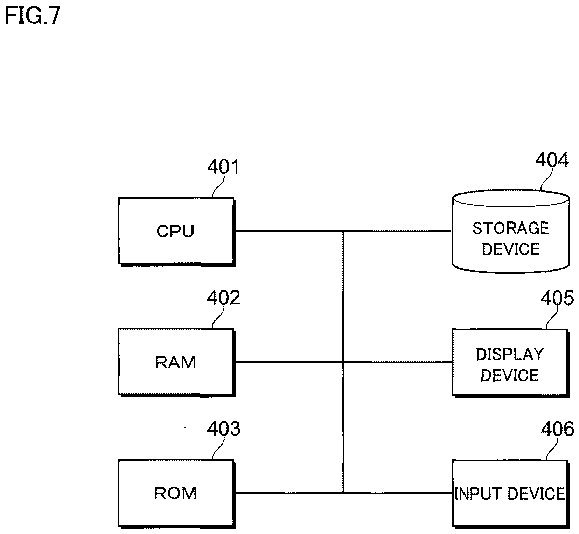

Fig. 7 is a diagram illustrating an example of a hardware configuration of the terminal device 400. The terminal device 400 is implemented by, for example, a computer. The computer that implements the terminal device 400 includes a CPU 401 that is an arithmetic unit, as well as a RAM 402, a ROM 403, and a storage device 404 that serve as a storage unit, a display device 405, and an input device 406. The RAM 402 is a main storage device, and is used as a working memory when the CPU 401 executes calculation processing. The ROM 403 stores programs and data such as a set value prepared in advance, and the CPU 401 can directly read the program and the data from the ROM 403 and execute the processing. The storage device 404 is a unit for storing programs and data. The storage device 404 stores a program, and the CPU 401 loads the program stored in the storage device 404 onto the main storage device and executes the program. In addition, a result of processing by the CPU 401 is stored and held in the storage device 404. For example, a magnetic disk device, a solid state drive (SSD), or the like is used as the storage device 404.

The display device 405 is a display unit that displays an image under the control by the CPU 401. As the display device 405, for example, a liquid crystal display or the like is used. The input device 406 is an input unit for a user to perform an input operation. As the input device 406, for example, a keyboard, a pointing device such as a mouse, or an input device such as a touch sensor is used. A touch panel may be configured in which a transparent touch sensor is used as the input device 406, the touch sensor is disposed to overlap the display area of the display device 405, and input can be performed by touching an operation screen displayed on the display device 405 with a finger or the like.

When the terminal device 400 is implemented by the computer illustrated in Fig. 7, the functions of the display control unit 430, the processing unit 440, and the communication control unit 450 described with reference to Fig. 6 are implemented by, for example, the CPU 401 executing a program. The display unit 410 is implemented by the display device 405. The reception unit 420 is implemented by the input device 406. The hardware configuration illustrated in Fig. 7 is merely an example of a case where the terminal device 400 is implemented by a computer.

### <Display screen and operation on display screen>

Next, a display screen displayed on the display unit 410 of the terminal device 400 and an operation performed by the user using the display screen will be described. In the present embodiment, the display unit 410 displays a first screen for displaying the power consumption records of the consumer in respective time periods, based on the magnitude of the average power consumption, and a second screen for displaying the power consumption records in time series. Each of the screens will be described below.

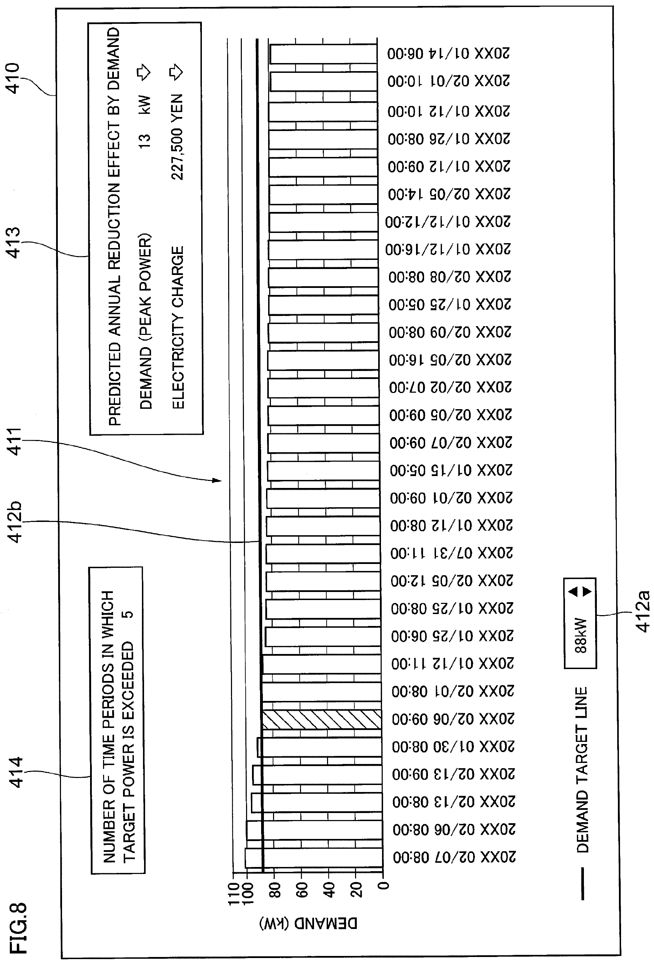

Fig. 8 is a diagram illustrating an example of the first screen for displaying the power consumption records based on the magnitude of the average power consumption. The first screen illustrated in Fig. 8 displays a graph 411 in which the average power consumption in each time period in a predetermined period (for example, one year) is indicated by the length of a bar corresponding to the magnitude of power. The average power consumption in each time period illustrated in the graph 411 in Fig. 8 is the power consumption record in each time period in the predetermined period. In the graph 411 illustrated in Fig. 8, the horizontal axis indicates the order based on the magnitude of the average power consumption, and the vertical axis indicating the length of the bar graph of each time period indicates the magnitude of the average power consumption (described as "DEMAND (kW)" in the drawing). Therefore, in the graph 411, the time periods in the predetermined period are arranged and displayed in descending order of the average power consumption from the left end to the right. When the bar graphs of all the time periods in the predetermined period cannot be displayed in the display area of the display unit 410, only part of the time periods included in the predetermined period may be displayed on the display unit 410. In such a case, the entirety may be visually recognizable through a screen operation such as scrolling or switching of the display range. In the example illustrated in Fig. 8, 30 bar graphs of the largest average power consumptions among those in the time periods in the predetermined period are displayed in the descending order. In the example illustrated in Fig. 8, the bar graphs of the respective time periods are simply arranged and displayed in the order of the magnitude of the average power consumption. Alternatively, each bar graph may be provided with an ordinal number representing the order of the magnitude of the average power consumption.

In the example illustrated in Fig. 8, for the bar graph of each time period, information on the date and time of the time period is displayed in association with the time period. For example, "20xx 02/07 08:00" is displayed as the date and time information for the leftmost bar graph corresponding to the largest average power consumption. Thus, the average power consumption can be recognized as that in the time period started from 8:00 in the displayed date. Thus, with the bar graphs of the respective time periods arranged based on the magnitude of the average power consumption and not in the temporal order, it is easy to intuitively recognize the time period corresponding to the Nth largest (or smallest) average power consumption.

In the example illustrated in Fig. 8, the information on the corresponding date and time is displayed in association with the bar graph of each time period. However, the information displayed in association with the bar graph of each time period is not limited to the information on the date and time. For example, in addition to or instead of the date and time information, information indicating a season such as spring, summer, autumn, or winter, or a seasonal event such as New Year, Higan, Golden Week (long spring holiday series), or Christmas may be displayed in association with the bar graph of each time period. In addition, in a case where an event such as a ceremony or a meeting is held in the facility in which the equipment appliance 200 is installed, the information on the event may be displayed in association with the bar graph of the time period corresponding to the date and time when the event is held. These types of additional information may be displayed in the form of text in the same manner as the date and time information in the example of Fig. 8, or may be displayed in the form of marks set in association with various types of information. Further, the display mode of the date and time information may be changed according to the information added. For example, the season may be associated with the display color, such as red for spring, blue for summer, green for autumn, and black for winter, and the date and time information may be displayed in the display color corresponding to the season. Alternatively, only the date and time information may be initially displayed, and when the user performs an operation of selecting any date and time, the additional information corresponding to the selected date and time may be displayed using a display unit such as what is known as tooltip or pop-up window. The operation of selecting the date and time may be, for example, a mouse-over operation of positioning a mouse pointer on the target date and time displayed, a touch operation of touching the target date and time displayed on a touch panel for a predetermined period of time or longer, or the like.

The date and time information is acquired from the server 300 together with the information on the average power consumption in each time period. As described above, for example, the date and time information is acquired by the operation information acquisition unit 120 of the control device 100, and is managed by the record information management unit 320 of the server 300 while being included in the record information on the equipment appliance 200. In addition, the information on the season or the seasonal event may be acquired by the server 300 from an external database in which such calendar related information is stored, or may be stored in the storage unit (the storage device 104 illustrated in Fig. 4 for example) of the server 300. For example, if such information is stored in the storage unit 130 of the control device 100 that manages the equipment appliance 200 of the consumer, the information on the unique event in the facility in which the equipment appliance 200 is installed can be acquired from the control device 100 by the server 300.

On the first screen, the user can designate an anticipated value of the target power. In the example illustrated in Fig. 8, the anticipated value "88 kW" of the target power is input to an input field 412a provided at the lower left of the graph 411. In the input field 412a illustrated in Fig. 8, button objects "▲" and "▼" for changing the numerical value are displayed. The "▲" button is for increasing the numerical value, and the button "▼" is for reducing the numerical value. Note that these buttons may not be used, and a numerical value may be input to the input field 412a through text input. As a method of inputting the anticipated value of the target power, selection of a bar graph of the average power consumption in one time period may be received, and the average power consumption in the selected time period may be set as the anticipated value of the target power. In the example illustrated in Fig. 8, the bar graph of the sixth time period from the left end is selected (the hatched bar graph in Fig. 8) in the graph 411, and the average power consumption in this time period is set as the anticipated value of the target power. The operation of selecting a bar graph may be, for example, clicking, using a mouse, one of the bar graphs corresponding to the respective time periods displayed in the graph 411, a touch operation of touching one of the bar graphs on a touch panel, or the like.

In the example illustrated in Fig. 8, when the anticipated value of the target power is input by the input operation of the user, a display indicating the input anticipated value of the target power is provided on the graph 411 of the first screen. As the display indicating the anticipated value of the target power, for example, a line (hereafter, referred to as a "demand target line") 412b may be displayed at the position of the value of the average power consumption corresponding to the anticipated value of the target power on the graph 411. In the example illustrated in Fig. 8, in the graph 411, the demand target line 412b is displayed at a position of the same height (88 kW) as the bar graph of the sixth time period from the left end.

When the anticipated value of the target power is input on the first screen, the terminal device 400 calculates the power reduction effect achieved by the demand control with the anticipated value set as the actual target power. In the example illustrated in Fig. 8, the maximum value (contract power) of the average power consumption in the power consumption records in the period (assumed to be one year) displayed in the graph 411 of the first screen is assumed to be 101 kW. As described above, in the example in Fig. 8, 88 kW is input as the anticipated value of the target power. The difference between the contract power and the anticipated value of the target power is 13 kW. Therefore, when demand control is to be performed with the target power being 88 kW and the contract power decreases from 101 kW to 88 kW, reduction of 13 kW is achieved. Then, the terminal device 400 calculates how much the electricity charge decreases by the reduction of the contract power. Then, the result of the calculation is displayed on the first screen. In the example illustrated in Fig. 8, in a reduction effect display field 413 provided at the upper right of the graph 411, the reduction amount of the contract power (described as "DEMAND (PEAK POWER)" in Fig. 8) that is " 13 kW" and the reduction amount of the electricity charge based on the reduction of the contract power that is "227,500 yen" are displayed as "PREDICTED ANNUAL REDUCTION EFFECT BY DEMAND". In the vicinity of each of the values, a downward arrow indicating that the value is the amount of decrease is displayed.

When the anticipated value of the target power is input on the first screen, the terminal device 400 identifies a time period in which the average power consumption exceeds the input anticipated value of the target power among the time periods displayed in the graph 411, and displays the number of such time periods on the first screen. As described above, on the first screen, when the anticipated value of the target power is the same value as the average power consumption in the sixth time period from the left end in the graph 411, the number of time periods in which the average power consumption exceeds the anticipated value is five. In the example illustrated in Fig. 8, the number of time periods in which the average power consumption exceeds the anticipated value of the target power (described as "NUMBER OF TIME PERIODS IN WHICH TARGET POWER IS EXCEEDED" in Fig. 8) that is "5" is displayed in an exceeding time period display field 414 provided at the upper left of the graph 411. Lower target power in the demand control leads to higher limitation on the power consumption by the equipment appliance 200. For this reason, the functions of the equipment appliance 200 are compromised, and the comfort and convenience offered to the user by the equipment appliance 200 are compromised. In the present embodiment, as described above, by presenting the number of time periods in which the average power consumption exceeds the anticipated value of the target power, the user who refers to the number of such time periods can intuitively recognize how much the comfort and convenience are compromised when the demand control is performed with the anticipated value actually set as the target power. Here, the number of time periods in which the average power consumption exceeds the anticipated value of the target power is identified and displayed. However, the method of presenting the comparison information between the anticipated value of the target power and the average power consumption in each time period is not limited to this example. For example, the number of time periods in which the average power consumption is equal to or less than the anticipated value of the target power may be identified and displayed.

Although not illustrated in Fig. 8, the first screen may be provided with a button object (hereafter, referred to as a "transmission button") for transmitting the anticipated value of the target power to the server 300. When the anticipated value of the target power is input as described above and the transmission button is operated by the user, the communication control unit 450 transmits the input anticipated value of the target power to the server 300. The server 300 may use the information on the anticipated value of the target power acquired from the terminal device 400 for the setting of the target power by the target power setting unit 330. The anticipated value of the target power may be transmitted under a mode in which the anticipated value is transmitted as one information to be referred to in the setting of the target power in the server 300, and a mode in which the anticipated value is transmitted as the set value of the target power. When the anticipated value of the target power is transmitted to the server 300 under the latter transmission mode, the anticipated value of the target power input on the terminal device 400 is directly set as the target power. As a specific operation method, for example, when the transmission button is operated by the user, a message asking whether the information is to be transmitted by the server 300 as information to be referred to for setting the target power or as the set value of the target power may be displayed, and the selection of the user may be received.

The first screen also functions as an operation screen for displaying a second screen including one time period. When the user selects one time period on the first screen and performs a screen switching operation, the terminal device 400 displays, on the display unit 410, the second screen displaying, in time series, the average power consumptions in respective time periods in a predetermined period (for example, one day) including the selected time period. The screen switching operation may be, for example, double clicking one of the bar graphs corresponding to the respective time periods displayed in the graph 411, using a mouse. In addition, a touch operation or the like of touching one of the bar graphs on the touch panel may be performed under an operation mode different from the selection operation on the bar graph for the input of the anticipated value of the target power. Although not illustrated in Fig. 8, a button object for screen switching may be displayed on the first screen, and the screen may be switched when one bar graph is selected and then the button object for screen switching is operated.

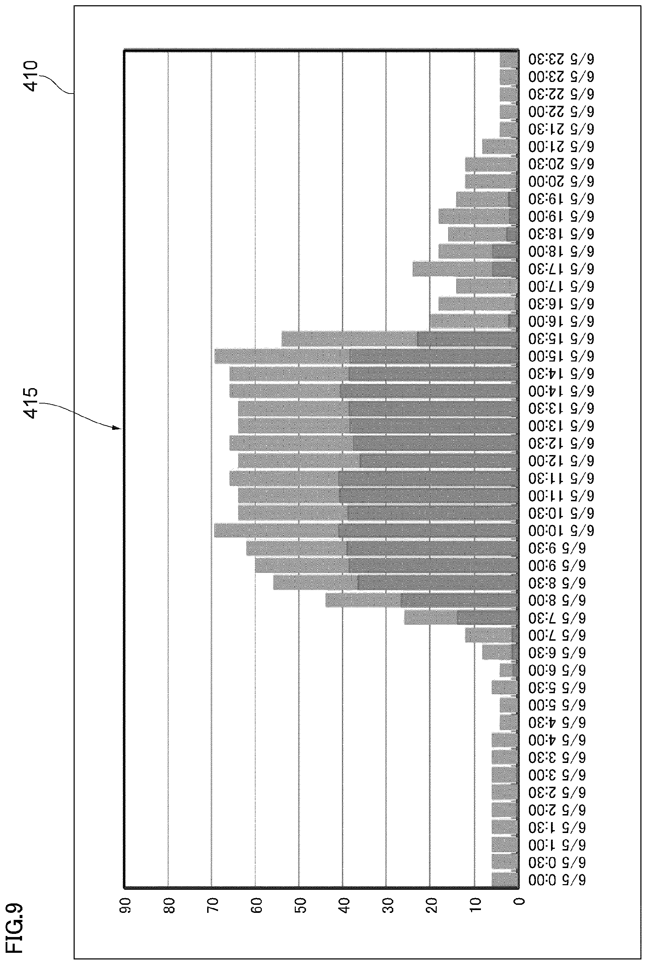

Fig. 9 is a diagram illustrating an example of the second screen for displaying the power consumption records in a predetermined period in time series. The second screen illustrated in Fig. 9 is a screen displayed as a result of selecting one time period that is June 5 on the first screen. The second screen illustrated in Fig. 9 displays, in time series, bar graphs the lengths of which correspond to the magnitudes of the average power consumptions in respective time periods from a time period starting at 0:00 on June 5 to a time period starting at 23:30. A graph 415 illustrated in the second screen is an example of a time-series graph. The user can refer to the graph 411 on the first screen, and for average power consumption in a certain time period, display the graph 415 of the average power consumption in a predetermined period including the time period, to obtain detailed information including the average power consumptions before and after the time period.

On the second screen, the average power consumption by each equipment appliance 200, among average power consumptions in the respective time period, may be displayed in a distinguishable manner. In the example illustrated in Fig. 9, the average power consumption by all of the equipment appliances 200 and the average power consumption by some of the equipment appliances 200 (for example, air conditioner) in each time period are displayed in a distinguishable manner. In the example illustrated in Fig. 9, a lighter bar graph indicates the average power consumption by all the equipment appliances 200 in each time period. A darker bar graph displayed to overlap the graph of the average power consumption by all of the equipment appliances 200 indicates the average power consumption by some of the equipment appliances 200 in each time period. While the average power consumption by all of the equipment appliances 200 and the average power consumption by some of the equipment appliances 200 are displayed in a distinguishable manner herein, the average power consumption by each of the plurality of equipment appliances 200 may be displayed in a distinguishable manner such as using different display colors for the respective equipment appliances 200.

In the display example described above, the display control performed in such a manner that on the terminal device 400, the first screen is displayed first and the display is switched to the second screen in response to the selection of one time period on the first screen. However, the display method of the first screen and the second screen is not limited to the above example. For example, when the second screen including the average power consumption in one time period is displayed from the first screen, the first screen and the second screen may be displayed in the display area of the display unit 410 at once. In this case, instead of the screen switching display, both the first screen and the second screen may be displayed together on the display unit 410 by the same operation as the mouse operation or the touch operation used for the screen switching operation. Further, a button object for displaying the second screen may be displayed on the first screen, and the second screen may be displayed together with the first screen when the button object for displaying the second screen is operated with one bar graph selected.

In the terminal device 400, the displaying of the first screen and the second screen described above is controlled by the display control unit 430. The display control unit 430 displays, on the first screen, the graph 411 in which the power consumption records in respective time periods in a predetermined period are arranged in order based on the magnitude of the average power consumption, and information on the date and time of each time period is added in association with the corresponding time period. In addition, the display control unit 430 displays, on the second screen, the graph 415 in which power consumption records in respective time periods in a predetermined period including one time period selected on the first screen are arranged in time series.

In the above-described example, the first screen and the second screen are generated by the server 300, and the display control unit 430 causes the display unit 410 to display the first screen and the second screen acquired from the server 300, but the specific operation is not limited to this. For example, a configuration may be employed in which information required for generating the first screen and the second screen is acquired from the server 300, and the display control unit 430 generates the first screen and the second screen and displays the screens on the display unit 410.

The processing unit 440 executes various types of data processing (such as, for example, calculation of the power reduction effect, calculation of the position of the demand target line, calculation of the number of time periods in which the average power consumption exceeds the anticipated value, and the like) based on the anticipated value of the target power input on the first screen.

Various operations on the first screen are received by the reception unit 420. When the reception unit 420 is configured by a touch panel that is a combination of a touch sensor and a display area of the display unit 410, an operation such as selection of one time period for inputting the anticipated value of the target power or screen switching can be implemented through a touch operation, which is an intuitive operation, on a graph displayed on the screen.

While the embodiment is described above, the technical scope of the present disclosure is not limited to the above-described embodiment. For example, in the above-described embodiment, the terminal device 400 connectable to the server 300 through a network is used to perform operations such as displaying of graphs on the first screen and the second screen and inputting of the anticipated value of the target power. Alternatively, for example, the operations for displaying the first screen and the second screen and for the input may be performed using a display device and an input device (not illustrated) of the control device 100.

In the configuration described in the above embodiment, the transmission button is provided on the first screen, for transmitting the input anticipated value of the target power to the server 300. In other words, this configuration can be regarded as a configuration in which the terminal device 400 displays the first screen when receiving the setting related to control on the average power consumption for each time period made by the user. On the other hand, a configuration may be employed in which the operation screen for transmitting the anticipated value or the set value of the target power to the server 300 is provided separately from the first screen, and after the user has determined the anticipated value or the set value of the target power with reference to the first screen or the second screen, the anticipated value or the set value of the target power determined by the operation screen for transmission is transmitted. In other words, this configuration can be regarded as a configuration in which the terminal device 400 displays the first screen before receiving the setting related to control on the average power consumption for each time period made by the user. Furthermore, the present disclosure includes various modifications and configuration substitutions that do not depart from the scope of the technical idea of the present disclosure.

The embodiment described above can be understood as follows. The information processing device according to the present disclosure includes: the display unit 410; the display control unit 430 configured to cause the display unit 410 to display a screen; and the reception unit 420 configured to receive a setting related to control on power consumption by a user. The display control unit 430 causes the display unit 410 to display power consumption records in predetermined respective time periods in a graph 411 of the time periods, and to display information on date and time of the time periods in the graph 411.

This configuration can contribute to improvement in convenience regarding setting of a target value in demand control by providing in a graph indicating, for each time period, a power consumption record in the time period, information on the date and time of the time period.

The graph 411 may be a graph 411 in which the power consumption records in a predetermined period are arranged in order of magnitude of the power consumption records in the respective time periods.

This configuration enables the graph to be referred to when setting the target value in the demand control, and can contribute to improvement in convenience regarding setting of the target value.

The reception unit 420 may receive a selection of at least one of the power consumption records in the respective time periods in the graph 411 displayed on the display unit 410, and the display control unit 430 may display, on the display unit 410, the time-series graph 415 in which the power consumption records in the respective time periods in a predetermined period including the time period selected in the graph 411 are arranged in time series.

With this configuration, it is possible to refer to more detailed information on the time period of interest of the user, including time periods before and after the time period of interest. Thus, the configuration can contribute to improvement in convenience regarding setting of the target value in the demand control.

The display control unit 430 may display, in the time-series graph 415 indicating the power consumption records in the respective time periods in the predetermined period, power consumption by each equipment appliance that consumes power in a distinguishable manner.

With this configuration, it is possible to refer to more detailed information on the power consumption record in the time period of interest of the user. Thus, the configuration can contribute to improvement in convenience regarding setting of the target value in the demand control.

The information processing device may further include the processing unit 440 configured to calculate, based on a difference between power consumption in a time period selected in the graph 411 and power consumption in another time period, power reduction effect achieved when the setting is made with the power consumption in the selected time period being a target value.

With this configuration, the power reduction effect achieved with the target value to be set can be recognized. Thus, the power reduction effect can be referred to in the setting of the target value in the demand control.

The display control unit 430 may display, on the display unit 410, information on the power reduction effect achieved when the power consumption in the time period selected in the graph 411 is set as a target value.

With this configuration, the power reduction effect achieved with the target value to be set can be visually recognized. Thus, the power reduction effect can be referred to in the setting of the target value in the demand control.

The display control unit 430 may display, on the display unit 410, the number of time periods in which power consumption exceeds power consumption in a time period selected in the graph 411.

With this configuration, the relationship between the target value to be set and the power consumption in another time period can be visually recognized.

The reception unit 420 may receive an operation of switching the display on the screen displayed on the display unit 410, and the display control unit 430 may switch between the operation screen for receiving the setting related to control on the power consumption by the user and the display of the power consumption record, and display the operation screen or the power consumption record on the display unit 410 based on the operation received by the reception unit 420.

With this configuration, the user can refer to the graph indicating, for each time period, the power consumption record in the time period, separately from the operation for receiving the setting related to control on the power consumption.

The reception unit 420 may receive an operation for displaying the power consumption records, and the display control unit 430 may display the graph 411 on the display unit 410 together with an operation screen for receiving the setting related to control on the power consumption by the user, based on the operation received by the reception unit 420.

With this configuration, the user can immediately perform the operation for receiving the setting related to control on the power consumption on the screen with reference to the graph indicating, for each time period, the power consumption record in the time period.

The reception unit 420 may receive an operation for displaying the power consumption records, and the display control unit 430 may display the graph 411 on the display unit 410 before receiving the setting related to control on the power consumption by the user, based on the operation received by the reception unit 420.

With this configuration, the user can refer to the graph indicating, for each time period, the power consumption record in the time period in advance, separately from the operation for receiving the setting related to control on the power consumption.

The reception unit 420 may receive an operation for displaying the power consumption records, and the display control unit 430 may display the graph 411 on the display unit 410 when receiving the setting related to control on the power consumption by the user, based on the operation received by the reception unit 420.

With this configuration, the user can perform the operation for receiving the setting related to control on the power consumption by referring to the screen with the graph indicating, for each time period, the power consumption record in the time period.

The reception unit 420 may include an operation unit that receives a setting related to control on the power consumption, through a user's touch operation on the display unit 410.

With this configuration, the setting can be made by a touch operation, which is an intuitive operation, on the graph displayed on the screen. Thus, the configuration can contribute to the improvement in convenience regarding setting of the target value in the demand control.

A program of the present disclosure is a program for causing a computer to function as display control unit configured to cause a display device to display a screen and a reception unit configured to receive a setting related to control on power consumption by a user. The computer functioning as the display control unit causes the display device to display power consumption records in predetermined respective time periods in the graph 411 of the time periods, and information on date and time of the time periods in the graph 411.

The computer in which the program is installed can contribute to improvement in convenience regarding setting of a target value in demand control by providing in the graph indicating, for each time period, the power consumption record in the time period, information on the date and time of the time period.

### Reference Signs List

100 Control device, 200 Equipment appliance, 300 Server, 310 Consumer management unit, 320 Record information management unit, 330 Target power setting unit, 340 Control information generation unit, 350 Operation reception control unit, 360 Communication control unit, 400 Terminal device, 410 Display unit, 411 Graph, 415 Graph, 420 Reception unit, 430 Display control unit, 440 Processing unit, 450 Communication control unit

## Claims

1. An information processing device comprising:
a display unit;
a display control unit configured to cause the display unit to display a screen; and
a reception unit configured to receive a setting related to control on power consumption by a user, wherein
the display control unit causes the display unit to display power consumption records in predetermined respective time periods in a graph of the time periods, and to display information on date and time of the time periods in the graph.

2. The information processing device according to claim 1, wherein the graph is a graph in which power consumption records in a predetermined period are arranged in order of magnitude of the power consumption records in the respective time periods.

3. The information processing device according to claim 1, wherein
the reception unit receives a selection of at least one of the power consumption records in the respective time periods in the graph displayed on the display unit, and
the display control unit displays, on the display unit, a time-series graph in which power consumption records in the respective time periods in a predetermined period including the time period selected in the graph are arranged in time series.

4. The information processing device according to claim 3, wherein the display control unit displays, in the time-series graph indicating the power consumption records in the respective time periods in the predetermined period, power consumption by each equipment appliance that consumes power in a distinguishable manner.

5. The information processing device according to claim 1, further comprising a calculation unit configured to calculate, based on a difference between power consumption in a time period selected in the graph and power consumption in another time period, power reduction effect achieved when the setting is made with the power consumption in the selected time period being a target value.

6. The information processing device according to claim 5, wherein the display control unit displays, on the display unit, information on the power reduction effect achieved when the power consumption in the time period selected in the graph is set as a target value.

7. The information processing device according to claim 1, wherein the display control unit displays, on the display unit, number of time periods in which power consumption exceeds power consumption in a time period selected in the graph.

8. The information processing device according to claim 1, wherein
the reception unit receives an operation of switching a display on a screen displayed on the display unit, and
the display control unit switches between an operation screen for receiving the setting related to control on the power consumption by the user and the display of the power consumption records, and displays the operation screen or the power consumption record on the display unit, based on the operation received by the reception unit.

9. The information processing device according to claim 1, wherein
the reception unit receives an operation for displaying the power consumption records, and
the display control unit displays the graph on the display unit together with an operation screen for receiving the setting related to control on the power consumption by the user, based on the operation received by the reception unit.

10. The information processing device according to claim 1, wherein
the reception unit receives an operation for displaying the power consumption records, and
the display control unit displays the graph on the display unit before receiving the setting related to control on the power consumption by the user, based on the operation received by the reception unit.

11. The information processing device according to claim 1, wherein
the reception unit receives an operation for displaying the power consumption records, and
the display control unit displays the graph on the display unit when receiving the setting related to control on the power consumption by the user, based on the operation received by the reception unit.

12. The information processing device according to any one of claims 1 to 11, wherein the reception unit includes an operation unit configured to receive the setting related to control on the power consumption, through a touch operation on the display unit by the user.

13. A program causing a computer to function as
a display control unit configured to cause a display device to display a screen; and
a reception unit configured to receive a setting related to control on power consumption by a user, wherein
the computer functioning as the display control unit causes the display device to display power consumption records in predetermined respective time periods in a graph of the time periods, and information on date and time of the time periods in the graph.
